# FASCICULE DE BREVET EUROPEEN

(11) **EP 2 566 732 B1**
(45) Date de publication et mention de la délivrance du brevet: **20.01.2016**
(21) Numéro de dépôt: 11707410.4
(22) Date de dépôt: 09.03.2011
(51) Int. Cl.: B60T 13/563, B60T 13/565

(54) **AGENCEMENT DE COMMANDE DE FREINAGE COMPORTANT UN SERVOFREIN EN PARTIE DÉCOUPLÉ**
BREMSBETÄTIGUNGSANORDNUNG MIT TEILWEISE UNGEKOPPELTEM BREMSKRAFTVERSTÄRKER
BRAKE OPERATING ARRANGEMENT COMPRISING A PARTIALLY UNCOUPLED BRAKE SERVO

(30) Priorité: 07.05.2010 FR 1001977
(43) Date de publication de la demande: 13.03.2013
(73) Titulaire: Robert Bosch GmbH, 70442 Stuttgart (DE)
(72) Inventeur: SPROCQ, Raynald, F-77450 Esbly (FR); CAGNAC, Bastien, F-60660 Cramoisy (FR); ANDERSON, Chris, F-75002 Paris (FR)
(86) Numéro de dépôt international: PCT/EP2011/053512
(87) Numéro de publication internationale: WO 2011/138066

(56) Documents cités:
- WO-A1-2005/073045
- FR-A1- 2 676 411

## Description

L'invention concerne un agencement de commande de freinage pour un véhicule automobile.

L'invention concerne plus particulièrement un agencement de commande de freinage pour un véhicule automobile comportant une pédale de frein susceptible d'actionner un servomoteur pneumatique d'assistance au freinage d'au moins un premier maître-cylindre relié hydrauliquement à au moins un premier organe de freinage du véhicule,
ledit servomoteur comportant une enveloppe rigide à l'intérieur de laquelle est mobile au moins une première cloison transversale délimitant de façon étanche une première chambre avant, soumise à une première pression, et une première chambre arrière, soumise à une deuxième pression variant entre la première pression et une pression supérieure à la première pression,
ledit servomoteur comportant un premier piston pneumatique mobile tubulaire qui est monté coulissant et rappelé élastiquement vers l'arrière dans l'enveloppe par l'intermédiaire d'un ressort de rappel, dont un tronçon avant est solidaire de la première cloison mobile, et qui est susceptible de solliciter une tige d'actionnement d'un premier piston hydraulique coulissant dans un première chambre hydraulique du premier maître-cylindre par l'intermédiaire d'un disque de réaction,
ledit servomoteur comportant une tige de commande accouplée à la pédale de frein se déplaçant dans le premier piston pneumatique sélectivement en fonction d'un effort axial d'entrée exercé vers l'avant à l'encontre d'un effort de rappel,
les mouvements de ladite tige de commande étant susceptibles de déterminer les ouvertures et fermetures d'au moins un clapet axial dit "d'admission" qui est interposé entre une source de pression soumise à la pression supérieure à la première pression et la première chambre arrière, et d'au moins un clapet axial dit "de rééquilibrage" qui est interposé entre la première chambre avant et la première chambre arrière, pour actionner la première cloison mobile,
ledit servomoteur comportant un plongeur, qui est reçu dans le premier piston pneumatique tubulaire, qui traverse la première cloison mobile, qui est solidaire de l'extrémité de la tige de commande, et qui est susceptible de solliciter directement la tige d'actionnement du premier maître-cylindre par l'intermédiaire du disque de réaction pour transmettre à la tige de commande l'effort de réaction du fluide hydraulique contenu dans le premier organe de freinage et la première chambre hydraulique du maître-cylindre.

On connaît de nombreux exemples d'agencements de commande de freinage de ce type, voir par exemple le document FR-2-676-411-A1.

Dans un tel agencement, tout effort s'exerçant sur le premier piston hydraulique est retransmis à la tige de commande par l'intermédiaire de la tige d'actionnement et du disque de réaction.

Ainsi, toute élévation de pression dans la première chambre hydraulique se traduit par un effort exercé par le premier piston hydraulique sur la tige d'actionnement, effort que le conducteur du véhicule peut donc ressentir dans la pédale.

La plupart des véhicules automobiles sont de nos jours équipés de dispositifs tels qu'un dispositif anti-blocage de roues dit "ABS" ou un dispositif de contrôle de stabilité dit "ESP" qui sont amenés lors de leur fonctionnement à prélever une quantité déterminée de liquide hydraulique dans le premier organe de freinage pour le réinjecter dans la première chambre hydraulique.

A fortiori, il en est de même quand la première chambre hydraulique est associée à un circuit de freinage qui est associé à un freinage électrique dit "récupératif", la pression au sein dudit circuit de freinage étant susceptible d'être modulée en réinjectant des quantités élevées de liquide hydraulique dans la première chambre hydraulique afin de moduler la puissance hydraulique de freinage au sein dudit circuit en combinaison avec une puissance de freinage fournie par une machine électrique.

Dans un tel agencement le servomoteur présente donc l'inconvénient de transmettre des sensations parasites à la pédale de frein, ce qui peut dérouter le conducteur en lui imposant une sensation de freinage à laquelle il n'est pas habitué.

Pour remédier à cet inconvénient, l'invention propose donc un agencement du type précédent comportant au moins un maître-cylindre mû par servomoteur dont une chambre découplée n'est pas susceptible de retransmettre d'efforts à la tige de commande du servomoteur.

Dans ce but, l'invention propose un agencement du type décrit précédemment caractérisé en ce que le servomoteur comporte en avant de la première cloison:
- une seconde cloison, mobile à l'intérieur de l'enveloppe rigide, délimitant de façon étanche une seconde chambre avant, communiquant avec la première chambre avant, et une seconde chambre arrière, communiquant avec la première chambre arrière, la seconde chambre arrière étant séparée de la première chambre avant par une cloison rigide,
- un second piston pneumatique mobile tubulaire qui est monté coulissant dans l'enveloppe, qui est traversé coaxialement par le ressort de rappel du premier piston pneumatique et par la tige d'actionnement du premier piston hydraulique, et dont un tronçon avant est solidaire de la seconde cloison mobile,
ledit second piston pneumatique étant accouplé à un second piston hydraulique coulissant dans une seconde chambre hydraulique d'un second maître-cylindre relié à au moins un second organe de freinage du véhicule, pour permettre d'actionner ledit second piston hydraulique sans que l'effort de réaction du fluide hydraulique contenu dans le second organe de freinage et la seconde chambre hydraulique du second maître-cylindre ne soit transmis à la tige de commande.

Selon d'autres caractéristiques de l'invention :
- les premier et second maîtres cylindres constituent un seul et même maître-cylindre à chambres coaxiales,
- le maître-cylindre comporte un premier corps tubulaire comportant la première chambre hydraulique cylindrique dans laquelle est monté coulissant le premier piston hydraulique et ledit premier corps comporte au moins une face d'épaulement, qui est fixée à une face avant d'un second corps coaxial du maître-cylindre, et à partir de laquelle s'étend au moins un tronçon arrière cylindrique qui est reçu coaxialement avec jeu dans un alésage du second corps pour délimiter la seconde chambre hydraulique coaxiale dans laquelle est monté coulissant le second piston hydraulique tubulaire,
- l'agencement comporte des moyens d'accouplement de la tige d'actionnement du premier piston hydraulique avec le second piston hydraulique, qui sont destinés à permettre la sollicitation du second piston hydraulique par la tige d'actionnement en cas de défaillance d'assistance du second piston pneumatique,
   la tige d'actionnement comporte :
   - un tronçon avant d'un diamètre correspondant à celui d'un alésage interne du premier piston hydraulique, qui traverse un perçage d'une paroi d'extrémité avant du second piston pneumatique tubulaire,
   - un tronçon arrière d'un diamètre supérieur à celui dudit perçage, dont une face avant est agencée selon un jeu axial dit "jeu de découplage" de ladite paroi d'extrémité avant du second piston pneumatique tubulaire lorsque les pistons pneumatiques occupent leur position de repos, pour permettre à la tige d'actionnement de solliciter le second piston hydraulique par l'intermédiaire de la paroi d'extrémité avant du second piston pneumatique en cas de défaillance d'assistance dudit second piston pneumatique.
- la paroi d'extrémité avant du second piston pneumatique tubulaire comporte :
   - au moins une partie centrale annulaire d'un diamètre correspondant sensiblement à celui du second piston hydraulique pour permettre la sollicitation dudit second piston hydraulique, ladite partie centrale étant traversée par le perçage de passage de la tige d'actionnement,
   - au moins deux lumières axiales réparties angulairement de manière régulière qui sont agencées radialement à l'extérieur de ladite partie centrale annulaire et qui sont destinées à permettre le passage de bras de maintien d'une coupelle d'appui du ressort de rappel du premier piston pneumatique qui est reçue à l'intérieur de l'alésage tubulaire du second piston pneumatique,
- la seconde chambre hydraulique du second maître-cylindre est reliée à au moins un second organe de freinage du véhicule par l'intermédiaire d'un circuit hydraulique comportant des moyens d'injection par pompage du fluide hydraulique dans ladite seconde chambre, ces moyens d'injection étant associés à un agencement de freinage électrique récupératif d'un véhicule hybride.

D'autres caractéristiques et avantages de l'invention apparaîtront à la lecture de la description détaillée qui suit pour la compréhension de laquelle on se reportera aux dessins annexés dans lesquels :
- la figure 1 est une vue d'ensemble en coupe axiale d'un servofrein comportant un servomoteur pneumatique d'assistance au freinage et un maître-cylindre réalisé conformément à l'invention représentés en position de repos ;
- la figure 2 est une vue de détail du servofrein de la figure 1 représenté en position d'application d'un effort de freinage ;
- la figure 3 est une vue de détail du servofrein de la figure 1 représenté en position d'application d'un effort de freinage avec injection de liquide hydraulique dans la seconde chambre du maître-cylindre ;
- la figure 4 est une vue selon la figure 1 du servofrein représenté en position d'application d'un effort de freinage en l'absence d'assistance.

Dans la description qui va suivre, des chiffres de référence identiques désignent des pièces identiques ou ayant des fonctions similaires.

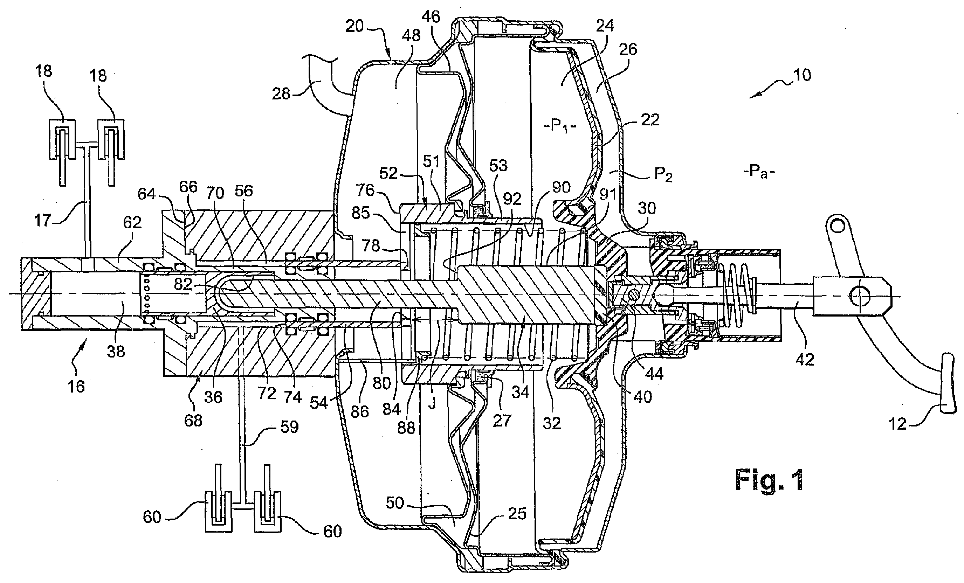

Par convention, les termes "avant", "arrière", supérieur", "inférieur" désignent respectivement des éléments ou des positions orientés respectivement vers la gauche, la droite, le haut, ou le bas des figures 1 à 4.

On a représenté à la figure 1 un agencement 10 de commande de freinage pour un véhicule automobile (non représenté).

De manière connue, l'agencement 10 comporte une pédale 12 de frein susceptible d'actionner un servomoteur 14 pneumatique d'assistance au freinage qui est susceptible d'actionner au moins un premier maître-cylindre 16 relié hydrauliquement à au moins un premier circuit de freinage 17 comportant un premier organe 18 de freinage du véhicule, par exemple un étrier de frein 18.

A cet effet, le servomoteur 14 comporte de manière connue une enveloppe 20 rigide à l'intérieur de laquelle est mobile au moins une première cloison 22 transversale qui délimite de façon étanche une première chambre avant 24 et une première chambre arrière 26.

La première chambre avant 24 est soumise à une première pression "P₁", et la première chambre arrière 26 est soumise à une deuxième pression "P₂" variant entre la première pression "P₁" et une pression "Pₐ" supérieure à la première pression "P₁".

Plus particulièrement, la pression "P₁" correspond notamment à une pression fournie par une source de dépression du véhicule. Dans le cas d'un moteur à allumage commandé, la pression de dépression "P₁" est par exemple fournie par un collecteur d'admission du moteur du véhicule et, dans le cas d'un moteur à allumage par compression de type "diesel", la pression de dépression "P₁" est par exemple fournie par une pompe à vide du véhicule.

La première chambre avant 24 est reliée à la source de dépression du véhicule par l'intermédiaire d'un conduit 28 de dépression qui débouche dans l'enveloppe 20.

Le servomoteur 14 comporte un premier piston 30 pneumatique mobile tubulaire qui est monté coulissant et rappelé élastiquement vers l'arrière dans l'enveloppe 20 par l'intermédiaire d'un ressort de rappel 32, et dont un tronçon avant est solidaire de la première cloison 22 mobile.

Le premier piston 30 est susceptible de manière connue de solliciter une tige 34 d'actionnement d'un premier piston hydraulique 36 coulissant dans une première chambre hydraulique 38 du premier maître-cylindre 16 par l'intermédiaire d'un disque 40 de réaction.

Pour commander les mouvements de la première cloison mobile 22 et du premier piston 30, le servomoteur 14 comporte une tige 42 de commande qui est accouplée à la pédale de frein 12, qui se déplace dans le premier piston 30 pneumatique sélectivement en fonction d'un effort axial d'entrée exercé vers l'avant à l'encontre d'un effort de rappel.

Les mouvements de la tige 42 de commande sont susceptibles de déterminer les ouvertures et fermetures d'au moins un clapet axial dit "d'admission" (non représenté) qui est interposé entre une source de pression soumise à la pression "Pₐ" supérieure à la première pression "P₁" et la première chambre arrière 26, et d'au moins un clapet axial dit "de rééquilibrage" (non représenté) qui est interposé entre la chambre première chambre avant 24 et la première chambre arrière 26, pour actionner la première cloison 22 mobile.

Le servomoteur 14 comporte par ailleurs un plongeur 44, qui est reçu dans le premier piston 30 pneumatique tubulaire, qui traverse la première cloison 22 mobile, qui est solidaire de l'extrémité de la tige 42 de commande, et qui est susceptible de solliciter directement la tige 34 d'actionnement du premier maître-cylindre 16 par l'intermédiaire du disque 40 de réaction pour transmettre à la tige 42 de commande l'effort de réaction du fluide hydraulique contenu dans le premier organe 18 de freinage et la première chambre hydraulique 38 du maître-cylindre 16.

Dans un tel agencement, tout effort s'exerçant sur le premier piston hydraulique 36 est retransmis à la tige de commande 42 par l'intermédiaire de la tige d'actionnement 34 et du disque 40 de réaction.

Ainsi, toute élévation de pression dans la première chambre hydraulique 38, causée par exemple par la réalimentation de ladite chambre 38 par une pompe hydraulique en réponse aux besoins d'un circuit d'anti-blocage de frein ABS, de contrôle de stabilité ESP ou d'un circuit de freinage mixte hydraulique/électrique se traduit par un effort exercé par le premier piston hydraulique 36 sur la tige d'actionnement 34, effort que le conducteur du véhicule peut donc ressentir dans la pédale 12, ce qui peut dérouter le conducteur en lui imposant une sensation de freinage à laquelle il n'est pas habitué.

Pour remédier à cet inconvénient, l'invention propose un agencement 10 du type décrit précédemment, caractérisé en ce que le servomoteur est susceptible d'actionner un second maître-cylindre qui est découplé mécaniquement de la tige d'actionnement 34.

Dans ce but, l'invention propose un agencement 10 du type décrit précédemment, caractérisé en ce que le servomoteur 14 comporte, en avant de la première cloison 22 une seconde cloison 46, mobile à l'intérieur de l'enveloppe 20 rigide, délimitant de façon étanche une seconde chambre avant 48, communiquant avec la première chambre avant 24, et une seconde chambre arrière 50, communiquant avec la première chambre arrière 26.

Comme on peut le voir sur les figures, la seconde chambre arrière 50 est séparée de la première chambre avant 24 par une cloison 25 rigide.

Le servomoteur 14 comporte aussi un second piston 52 pneumatique mobile tubulaire qui est monté coulissant dans l'enveloppe 20.

Un tronçon avant 51 de ce second piston 52 pneumatique est solidaire de la seconde cloison mobile 46. Le second piston 52 est traversé coaxialement par le ressort de rappel 32 du premier piston pneumatique 30 et par la tige 34 d'actionnement du premier piston hydraulique 36. Pour garantir un guidage correct du second piston 52, un tronçon arrière 53 de celui-ci traverse aussi la cloison rigide 25. Un joint annulaire 27 assure l'étanchéité entre la cloison rigide 25 et le tronçon arrière 53.

Le second piston pneumatique 52 est susceptible de solliciter un second piston hydraulique 54 coulissant dans une seconde chambre hydraulique 56 d'un second maître-cylindre relié à au moins à un second circuit de freinage 59 comportant un second organe 60 de freinage du véhicule.

Dans la configuration de repos qui a été représentée à la figure 1, la tige 42 de commande du servomoteur 12 n'étant pas actionnée, le clapet de rééquilibrage est ouvert et la première chambre avant 24, soumise à la dépression, communique avec la première chambre arrière 26. Il en est de même pour la seconde chambre avant 48 qui est reliée à la première chambre avant 24 et pour la seconde chambre arrière 50 qui est reliée à la première chambre arrière 26. Les première et seconde cloisons 22, 46 sont immobiles et de ce fait les premier et second pistons pneumatiques 20, 52 sont immobiles.

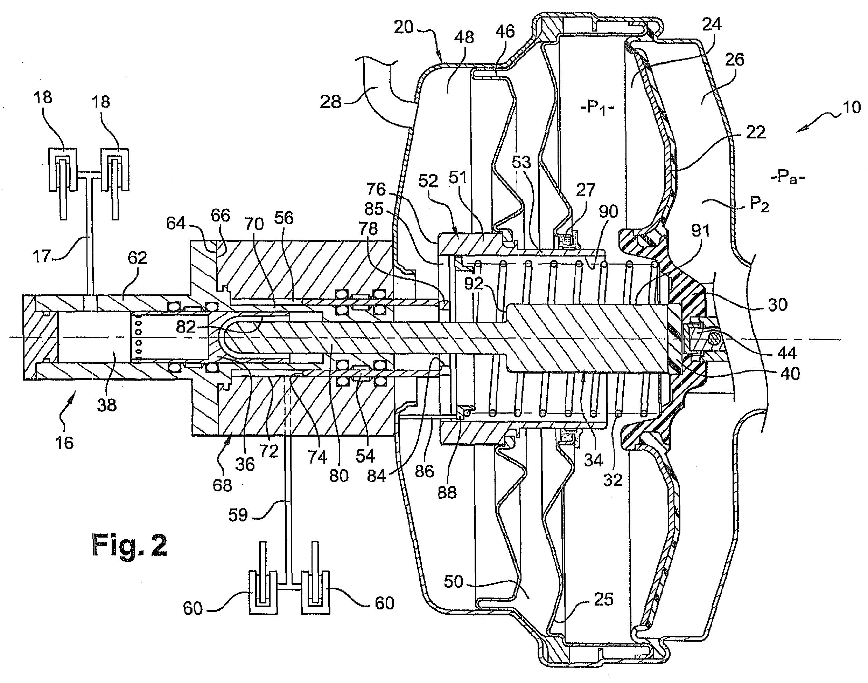

Dans une configuration d'application d'un effort de freinage qui a été illustrée à la figure 2, on comprendra que l'actionnement de la tige 42 de commande du servomoteur 12 permet de manière conventionnelle de commander la fermeture du clapet de rééquilibrage, isolant ainsi la première chambre avant 24, soumise à la dépression, de la première chambre arrière 26.

Puis l'actionnement de la tige 42 de commande en se poursuivant provoque l'ouverture du clapet d'admission et donc l'admission d'air dans la première chambre arrière 26, et de ce fait la différence des pressions s'exerçant sur la première cloison mobile 22 provoque son avancée, celle du premier piston pneumatique 20 et par conséquent la sollicitation par le premier piston pneumatique 20 du premier piston hydraulique 36.

Simultanément, la seconde chambre avant 48 étant reliée à la première chambre avant 24 et la seconde chambre arrière 50 étant reliée à la première chambre arrière 26, la fermeture du clapet de rééquilibrage puis l'ouverture du clapet d'admission provoque l'avancée de la seconde cloison mobile 46, du second piston pneumatique 52 et donc la sollicitation du second piston hydraulique 54 du second maître-cylindre.

L'avancée du second piston hydraulique 54 est donc commandée uniquement par le mouvement du second piston pneumatique 52.

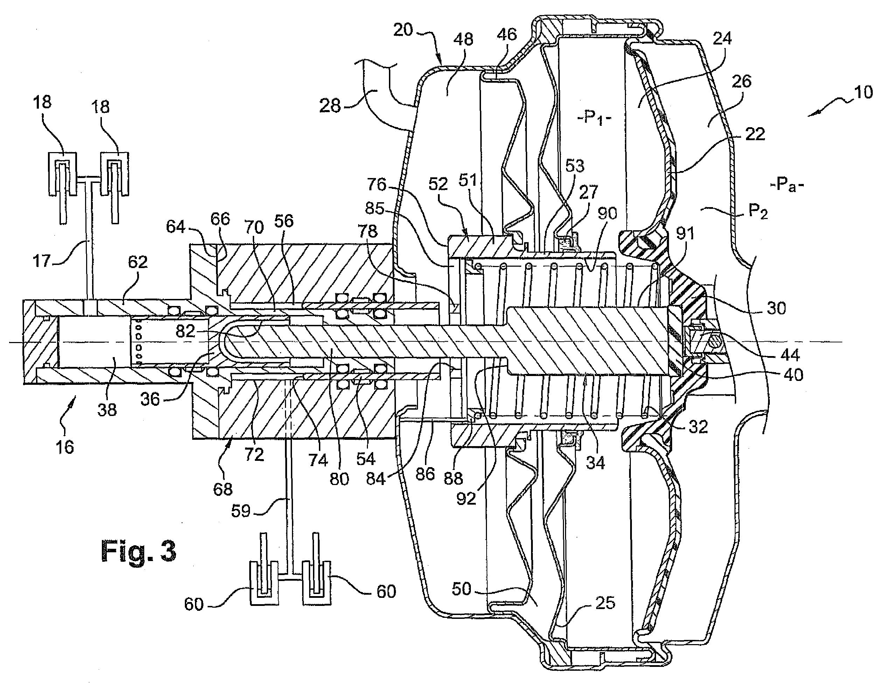

Si le second circuit de freinage 59 comporte par exemple un circuit d'anti-blocage de frein ABS, de contrôle de stabilité ESP, ou un circuit de freinage mixte hydraulique/électrique qui est susceptible de réinjecter à l'aide d'une pompe (non représentée) du liquide hydraulique dans la seconde chambre 56 du second maître-cylindre, le servomoteur 12 peut occuper une configuration d'application d'un effort de freinage avec injection de liquide hydraulique dans la seconde chambre 56 du maître-cylindre, comme représenté à la figure 3.

Dans cette configuration, l'élévation de pression dans la seconde chambre 56 provoque le recul du second piston hydraulique 54 comme représenté à la figure 3. Le recul de ce second piston hydraulique 54 entraîne aussi nécessairement le recul du second piston pneumatique 52 mais aucun effort n'est exercé sur la tige d'actionnement 34, et de ce fait aucun effort n'est transmis ni à la tige de commande 42, ni à la pédale 12 de frein. La réalimentation de la seconde chambre 56 est donc sans incidence sur la sensation de freinage éprouvée par le conducteur.

Dans le mode de réalisation préféré de l'invention, le premier maître-cylindre 16 et le second maître-cylindre constituent un seul et même maître-cylindre 16 à chambres coaxiales 38, 56.

Plus particulièrement, le maître-cylindre 16 comporte un premier corps tubulaire 62 comportant la première chambre hydraulique cylindrique 38 dans laquelle est monté coulissant le premier piston hydraulique 36. Ce premier corps 62 comporte au moins une face d'épaulement 64, qui est fixée à une face avant 66 d'un second corps coaxial 68 du maître-cylindre 16.

A partir de la face d'épaulement 64 s'étend au moins un tronçon arrière cylindrique 70 qui est reçu coaxialement avec jeu dans un alésage 72 du second corps 68. De la sorte, le tronçon arrière 70 et l'alésage 72 délimitent la seconde chambre hydraulique coaxiale 56 dans laquelle est monté coulissant le second piston hydraulique 54, qui est tubulaire.

Il sera compris que les diamètres du tronçon arrière 70 et de l'alésage 72 déterminent la surface frontale 74 du second piston hydraulique 54. Ces diamètres seront choisis pour que la surface frontale 74 soit sensiblement voisine de celle du premier piston hydraulique 36.

Avantageusement, le second piston hydraulique 54 étant coaxial au maître-cylindre 16, l'invention permet de solliciter coaxialement ledit second piston hydraulique 54 par l'intermédiaire du second piston pneumatique 52.

A cet effet, une paroi d'extrémité avant 76 du second piston pneumatique tubulaire 52 comporte au moins une partie centrale annulaire 78 d'un diamètre correspondant sensiblement à celui du second piston hydraulique 54 pour permettre la sollicitation dudit second piston hydraulique 54.

Par ailleurs, la tige d'actionnement 34 comporte un tronçon avant 80 d'un diamètre correspondant à celui d'un alésage interne 82 du premier piston hydraulique 36 dans lequel elle est reçue, ce tronçon avant traversant un perçage 84 formé dans la partie centrale annulaire 78 de la paroi d'extrémité avant 76 du second piston pneumatique tubulaire 52.

Ainsi, comme on peut le voir sur les figures, la sollicitation des deux pistons hydrauliques 36 et 54 est elle entièrement indépendante.

Par ailleurs, la paroi d'extrémité avant 76 du second piston pneumatique tubulaire 52 comporte au moins deux lumières axiales 85 réparties angulairement de manière régulière qui sont agencées radialement à l'extérieur de la partie centrale annulaire 78 et qui sont destinées à permettre le passage de bras 86 de maintien d'une coupelle d'appui 88 du ressort de rappel 32 du premier piston pneumatique 30, laquelle coupelle est reçue à l'intérieur de l'alésage tubulaire 90 du second piston pneumatique 52.

Dans le mode de réalisation préféré de l'invention, l'agencement 10 comporte des moyens d'accouplement de la tige d'actionnement 34 du premier piston hydraulique 36 avec le second piston hydraulique 54, qui sont destinés à permettre la sollicitation du second piston hydraulique 54 par la tige d'actionnement 34 en cas de défaillance d'assistance du second piston pneumatique 52.

A cet effet, la tige d'actionnement 34 comporte un tronçon arrière 91 d'un diamètre supérieur à celui du perçage 84, dont une face avant 92 est agencée selon un jeu axial "J" dit "jeu de découplage" de la paroi d'extrémité avant 76 du second piston pneumatique tubulaire 52 lorsque les pistons pneumatiques occupent leur position de repos, comme représenté à la figure 1.

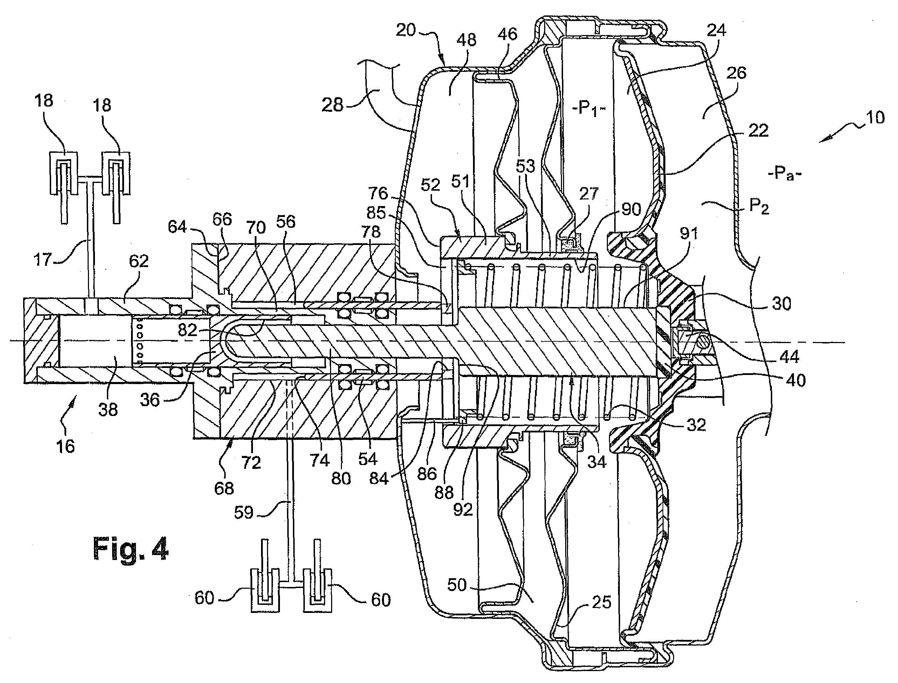

Ainsi, en cas de défaillance d'assistance du second piston pneumatique 52, comme représenté à la figure 4, le jeu "J" est absorbé et la face avant 92 du tronçon arrière 91 de la tige d'actionnement 34 permet à la tige d'actionnement 34 de solliciter directement le second piston hydraulique 54 par l'intermédiaire de la paroi d'extrémité avant 76 du second piston pneumatique 52.

Il sera ainsi compris que l'invention trouve essentiellement à s'appliquer à un agencement 10 dans lequel la seconde chambre hydraulique 56 du maître-cylindre 16 est reliée à au moins un second organe 60 de freinage du véhicule par l'intermédiaire d'un circuit hydraulique 59 comportant des moyens d'injection par pompage du fluide hydraulique dans ladite seconde chambre 56, ces moyens d'injection étant associés à un agencement de freinage électrique récupératif d'un véhicule hybride.

### NOMENCLATURE

- 10: agencement
- 12: pédale de frein
- 14: servomoteur pneumatique d'assistance
- 16: premier maître-cylindre
- 17: premier circuit de freinage
- 18: premier organe de freinage
- 20: enveloppe du servomoteur
- 22: première cloison transversale mobile du servomoteur
- 24: première chambre avant du servomoteur
- 25: cloison séparant la seconde chambre arrière de la première chambre avant
- 26: première chambre arrière du servomoteur
- 27: joint annulaire
- 28: conduit de dépression du servomoteur
- 30: premier piston pneumatique
- 32: ressort de rappel
- 34: tige d'actionnement
- 36: premier piston hydraulique
- 38: première chambre hydraulique
- 40: disque de réaction
- 42: tige de commande
- 44: plongeur
- 46: seconde cloison transversale mobile du servomoteur
- 48: seconde chambre avant du servomoteur
- 50: seconde chambre arrière du servomoteur
- 51: tronçon avant du second piston pneumatique
- 52: second piston pneumatique
- 53: tronçon arrière du second piston pneumatique
- 54: second piston hydraulique
- 56: seconde chambre hydraulique
- 59: second circuit de freinage
- 60: second organe de freinage
- 62: premier corps tubulaire du maître-cylindre
- 63: pompe
- 64: face d'épaulement du premier corps tubulaire du maître-cylindre
- 65: électrovanne commandée
- 66: face avant du second corps tubulaire du maître-cylindre
- 67: électronique de commande
- 68: second corps coaxial du maître-cylindre
- 70: tronçon arrière cylindrique du premier corps tubulaire du maître-cylindre
- 72: alésage du second corps tubulaire du maître-cylindre
- 74: face avant du second piston hydraulique
- 76: paroi d'extrémité avant du second piston pneumatique
- 78: partie centrale annulaire de la paroi d'extrémité avant
- 80: tronçon avant de la tige d'actionnement
- 82: alésage interne du premier piston hydraulique
- 84: perçage de la partie centrale annulaire de la paroi d'extrémité avant du second piston pneumatique
- 85: lumières axiales de la paroi d'extrémité avant du second piston pneumatique
- 86: bras
- 88: coupelle d'appui
- 90: alésage du second piston pneumatique
- 91: tronçon arrière de la tige d'actionnement
- 92: face avant du tronçon arrière de la tige d'actionnement.

## Revendications

1. Agencement (10) de commande de freinage pour un véhicule automobile comportant une pédale (12) de frein susceptible d'actionner un servomoteur (14) pneumatique d'assistance au freinage d'au moins un premier maître-cylindre (16) relié hydrauliquement à au moins un premier organe (18) de freinage du véhicule,
ledit servomoteur (14) comportant une enveloppe (20) rigide à l'intérieur de laquelle est mobile au moins une première cloison (22) transversale délimitant de façon étanche une première chambre avant (24), soumise à une première pression (P₁), et une première chambre arrière (26), soumise à une deuxième pression (P₂) variant entre la première pression (P₁) et une pression (Pₐ) supérieure à la première pression (P₁),
ledit servomoteur (14) comportant un premier piston (30) pneumatique mobile tubulaire qui est monté coulissant et rappelé élastiquement vers l'arrière dans l'enveloppe (20) par l'intermédiaire d'un ressort (32) de rappel, dont un tronçon avant est solidaire de la première cloison (22) mobile, et qui est susceptible de solliciter une tige (34) d'actionnement d'un premier piston hydraulique (36) coulissant dans un première chambre hydraulique (38) du premier maître-cylindre (16) par l'intermédiaire d'un disque (40) de réaction,
ledit servomoteur (14) comportant une tige (42) de commande accouplée à la pédale de frein (12) se déplaçant dans le premier piston (30) pneumatique sélectivement en fonction d'un effort axial d'entrée exercé vers l'avant à l'encontre d'un effort de rappel,
les mouvements de ladite tige (42) de commande étant susceptibles de déterminer les ouvertures et fermetures d'au moins un clapet axial dit "d'admission" qui est interposé entre une source de pression soumise à la pression (Pₐ) supérieure à la première pression (P₁) et la première chambre arrière (26), et d'au moins un clapet axial dit "de rééquilibrage" qui est interposé entre la première chambre avant (24) et la première chambre arrière (26), pour actionner la première cloison (22) mobile,
ledit servomoteur comportant un plongeur (44), qui est reçu dans le premier piston (30) pneumatique tubulaire, qui traverse la première cloison (22) mobile, qui est solidaire de l'extrémité de la tige (42) de commande, et qui est susceptible de solliciter directement la tige (34) d'actionnement du premier maître-cylindre (16) par l'intermédiaire du disque (40) de réaction pour transmettre à la tige (42) de commande l'effort de réaction du fluide hydraulique contenu dans le premier organe (18) de freinage et la première chambre hydraulique (38) du maître-cylindre (16),
**caractérisé en ce que** le servomoteur (14) comporte en avant de la première cloison (22) :
- une seconde cloison (46), mobile à l'intérieur de l'enveloppe (20) rigide, délimitant de façon étanche une seconde chambre avant (48), communiquant avec la première chambre avant (24), et une seconde chambre arrière (50), communiquant avec la première chambre arrière (26), la seconde chambre arrière (50) étant séparée de la première chambre (24) avant par une cloison rigide (25),
- un second piston (52) pneumatique mobile tubulaire qui est monté coulissant dans l'enveloppe (20), qui est traversé coaxialement par le ressort de rappel (32) du premier piston pneumatique (30) et par la tige (34) d'actionnement du premier piston hydraulique (36), et dont un tronçon avant (51) est solidaire de la seconde cloison (46) mobile,
ledit second piston pneumatique (52) étant accouplé à un second piston hydraulique (54) coulissant dans une seconde chambre hydraulique (56) d'un second maître-cylindre relié à au moins un second organe (60) de freinage du véhicule, pour permettre d'actionner ledit second piston hydraulique (54) sans que l'effort de réaction du fluide hydraulique contenu dans le second organe de freinage (60) et la seconde chambre hydraulique (56) du second maître-cylindre ne soit transmis à la tige de commande (42).

2. Agencement (10) selon la revendication précédente, **caractérisé en ce que** les premier (16) et second maître-cylindres constituent un seul et même maître-cylindre (16) à chambres coaxiales (38, 56).

3. Agencement (10) selon la revendication précédente, **caractérisé en ce que** le maître-cylindre (16) comporte un premier corps tubulaire (62) comportant la première chambre hydraulique (38) cylindrique dans laquelle est monté coulissant le premier piston hydraulique (36) et **en ce que** ledit premier corps (62) comporte au moins une face d'épaulement (64), qui est fixée à une face avant (66) d'un second corps coaxial (68) du maître-cylindre (16), et à partir de laquelle s'étend au moins un tronçon arrière cylindrique (70) qui est reçu coaxialement avec jeu dans un alésage (72) du second corps (68) pour délimiter la seconde chambre hydraulique coaxiale (56) dans laquelle est monté coulissant le second piston hydraulique tubulaire (54).

4. Agencement (10) selon l'une des revendications précédentes, **caractérisé en ce qu'**il comporte des moyens d'accouplement de la tige d'actionnement (34) du premier piston hydraulique (36) avec le second piston hydraulique (54), qui sont destinés à permettre la sollicitation du second piston hydraulique (54) par la tige d'actionnement (34) en cas de défaillance d'assistance du second piston pneumatique (52).

5. Agencement (10) selon la revendication précédente, **caractérisé en ce que** la tige d'actionnement (34) comporte :
- un tronçon avant (80) d'un diamètre correspondant à celui d'un alésage interne (82) du premier piston hydraulique (36), qui traverse un perçage (84) d'une paroi d'extrémité avant (76)du second piston pneumatique tubulaire (52),
- un tronçon arrière (91) d'un diamètre supérieur à celui dudit perçage (84), dont une face avant (92) est agencée selon un jeu axial (J) dit "jeu de découplage" de ladite paroi d'extrémité (76) avant du second piston pneumatique tubulaire (52) lorsque les pistons pneumatiques (30, 52) occupent leur position de repos, pour permettre à la tige d'actionnement (34) de solliciter le second piston hydraulique (54) par l'intermédiaire de la paroi d'extrémité avant (76) du second piston pneumatique (52) en cas de défaillance d'assistance dudit second piston pneumatique (52).

6. Agencement (10) selon la revendication précédente, **caractérisé en ce que** la paroi d'extrémité avant (76) du second piston pneumatique tubulaire (52) comporte :
- au moins une partie centrale annulaire (78) d'un diamètre correspondant sensiblement à celui du second piston hydraulique (54) pour permettre la sollicitation dudit second piston hydraulique (54), ladite partie centrale (78) étant traversée par le perçage (84) de passage de la tige (34) d'actionnement,
- au moins deux lumières axiales (85) réparties angulairement de manière régulière qui sont agencées radialement à l'extérieur de ladite partie centrale annulaire (78) et qui sont destinées à permettre le passage de bras (86) de maintien d'une coupelle (88) d'appui du ressort (32) de rappel du premier piston pneumatique (30) qui est reçue à l'intérieur de l'alésage tubulaire (90) du second piston pneumatique (52).

7. Agencement (10) selon l'une quelconque des revendications précédentes, **caractérisé en ce que** la seconde chambre hydraulique (56) du second maître-cylindre est reliée à au moins un second organe (60) de freinage du véhicule par l'intermédiaire d'un circuit hydraulique (59) comportant des moyens d'injection par pompage du fluide hydraulique dans ladite seconde chambre (56), ces moyens d'injection étant associés à un agencement de freinage électrique récupératif d'un véhicule hybride.

## Patentansprüche

1. Bremssteuerungsanordnung (10) für ein Kraftfahrzeug, die ein Bremspedal (12) aufweist, das einen pneumatischen Bremsassistenz-Servomotor (14) mindestens eines ersten Hauptzylinders (16) betätigen kann, der hydraulisch mit mindestens einem ersten Bremsorgan (18) des Fahrzeugs verbunden ist,
wobei der Servomotor (14) eine steife Hülle (20) aufweist, in deren Innerem mindestens eine erste Quertrennwand (22) beweglich ist, die eine erste vordere Kammer (24), die einem ersten Druck (P₁) ausgesetzt ist, und eine erste hintere Kammer (26) dicht begrenzt, die einem zweiten Druck (P₂) ausgesetzt ist, der zwischen dem ersten Druck (P₁) und einem höheren Druck (Pₐ) als der erste Druck (P₁) variiert,
wobei der Servomotor (14) einen ersten rohrförmigen beweglichen Pneumatikkolben (30) aufweist, der gleitend montiert ist und in der Hülle (20) durch eine Rückstellfeder (32) elastisch nach hinten zurückgestellt wird, von der ein vorderer Abschnitt fest mit der ersten beweglichen Trennwand (22) verbunden ist, und der eine Betätigungsstange (34) eines in einer ersten Hydraulikkammer (38) des ersten Hauptzylinders (16) gleitenden ersten Hydraulikkolbens (36) mittels einer Reaktionsscheibe (40) beaufschlagen kann,
wobei der Servomotor (14) eine an das Bremspedal (12) gekoppelte Steuerstange (42) aufweist, die sich im ersten Pneumatikkolben (30) selektiv abhängig von einer axialen Eingangskraft verschiebt, die nach vorne gegen eine Rückstellkraft ausgeübt wird,
wobei die Bewegungen der Steuerstange (42) die Öffnungen und Schließungen mindestens eines axialen so genannten "Einlass"-Ventils, das zwischen eine dem höheren Druck (Pₐ) als dem ersten Druck (P₁) ausgesetzten Druckquelle und die erste hintere Kammer (26) eingefügt ist, und mindestens eines axialen so genannten "Ausgleichs"-Ventils bestimmen können, das zwischen die erste vordere Kammer (24) und die erste hintere Kammer (26) eingefügt ist, um die erste mobile Trennwand (22) zu betätigen,
wobei der Servomotor einen Tauchkolben (44) aufweist, der im ersten rohrförmigen Pneumatikkolben (30) aufgenommen wird, der die erste mobile Trennwand (22) durchquert, der fest mit dem Ende der Steuerstange (42) verbunden ist und der die Betätigungsstange (34) des ersten Hauptzylinders (16) mittels der Reaktionsscheibe (40) direkt beaufschlagen kann, um die Reaktionskraft des im ersten Bremsorgan (18) und in der ersten Hydraulikkammer (38) des Hauptzylinders (16) enthaltenen Hydraulikfluids an die Steuerstange (42) zu übertragen,
**dadurch gekennzeichnet, dass** der Servomotor (14) vor der ersten Trennwand (22) aufweist:
- eine zweite Trennwand (46), die im Inneren der steifen Hülle (20) beweglich ist, eine zweite vordere Kammer (48) dicht begrenzt, mit der ersten vorderen Kammer (24) in Verbindung steht, und eine zweite hintere Kammer (50), die mit der ersten hinteren Kammer (26) in Verbindung steht, wobei die zweite hintere Kammer (50) von der ersten vorderen Kammer (24) durch eine steife Trennwand (25) getrennt ist,
- einen zweiten rohrförmigen beweglichen Pneumatikkolben (52), der gleitend in die Hülle (20) montiert ist, der koaxial von der Rückstellfeder (32) des ersten Pneumatikkolbens (30) und von der Betätigungsstange (34) des ersten Hydraulikkolbens (36) durchquert wird, und von dem ein vorderer Abschnitt (51) fest mit der zweiten beweglichen Trennwand (46) verbunden ist,
wobei der zweite Pneumatikkolben (52) mit einem zweiten Hydraulikkolben (54) gekoppelt ist, der in einer zweiten Hydraulikkammer (56) eines zweiten Hauptzylinders gleitet, der mit mindestens einem zweiten Bremsorgan (60) des Fahrzeugs verbunden ist, um die Betätigung des zweiten Hydraulikkolbens (54) zu erlauben, ohne dass die Reaktionskraft des im zweiten Bremsorgan (60) und der zweiten Hydraulikkammer (56) des zweiten Hauptzylinders enthaltenen Hydraulikfluids auf die Steuerstange (42) übertragen wird.

2. Anordnung (10) nach dem vorhergehenden Anspruch, **dadurch gekennzeichnet, dass** der erste (16) und der zweite Hauptzylinder einen einzigen Hauptzylinder (16) mit koaxialen Kammern (38, 56) bilden.

3. Anordnung (10) nach dem vorhergehenden Anspruch, **dadurch gekennzeichnet, dass** der Hauptzylinder (16) einen ersten rohrförmigen Körper (62) aufweist, der die erste zylindrische Hydraulikkammer (38) aufweist, in die der erste Hydraulikkolben (36) gleitend montiert ist, und dass der erste Körper (62) mindestens eine schulterförmige Seite (64) aufweist, die an einer Vorderseite (66) eines zweiten koaxialen Körpers (68) des Hauptzylinders (16) befestigt ist, und von der ausgehend sich mindestens ein zylindrischer hinterer Abschnitt (70) erstreckt, der mit Spiel koaxial in einer Bohrung (72) des zweiten Körpers (68) aufgenommen wird, um die zweite koaxiale Hydraulikkammer (56) zu begrenzen, in die der zweite rohrförmige Hydraulikkolben (54) gleitend montiert ist.

4. Anordnung (10) nach einem der vorhergehenden Ansprüche, **dadurch gekennzeichnet, dass** sie Kopplungseinrichtungen der Betätigungsstange (34) des ersten Hydraulikkolbens (36) mit dem zweiten Hydraulikkolben (54) aufweist, die dazu bestimmt sind, die Beaufschlagung des zweiten Hydraulikkolbens (54) durch die Betätigungsstange (34) im Fall des Assistenzausfalls des zweiten Pneumatikkolbens (52) zu erlauben.

5. Anordnung (10) nach dem vorhergehenden Anspruch, **dadurch gekennzeichnet, dass** die Betätigungsstange (34) aufweist:
- einen vorderen Abschnitt (80) mit einem Durchmesser, der demjenigen einer Innenbohrung (82) des ersten Hydraulikkolbens (36) entspricht, der eine Bohrung (84) einer vorderen Endwand (76) des zweiten rohrförmigen Pneumatikkolbens (52) durchquert,
- einen hinteren Abschnitt (91) mit einem Durchmesser größer als derjenige der Bohrung (84), von dem eine Vorderseite (92) gemäß einem "Abkopplungsspiel" genannten axialen Spiel (J) der vorderen Endwand (76) des zweiten rohrförmigen Pneumatikkolbens (52) angeordnet ist, wenn die Pneumatikkolben (30, 52) ihre Ruhestellung einnehmen, um es der Betätigungsstange (34) zu erlauben, den zweiten Hydraulikkolben (54) mittels der vorderen Endwand (76) des zweiten Pneumatikkolbens (52) im Fall eines Assistenzausfalls des zweiten Pneumatikkolbens (52) zu beaufschlagen.

6. Anordnung (10) nach dem vorhergehenden Anspruch, **dadurch gekennzeichnet, dass** die vordere Endwand (76) des zweiten rohrförmigen Pneumatikkolbens (52) aufweist:
- mindestens einen ringförmigen zentralen Teil (78) mit einem Durchmesser, der im Wesentlichen demjenigen des zweiten Hydraulikkolbens (54) entspricht, um die Beaufschlagung des zweiten Hydraulikkolbens (54) zu erlauben, wobei der zentrale Teil (78) von der Durchgangsbohrung (84) der Betätigungsstange (34) durchquert wird,
- mindestens zwei winkelmäßig gleichmäßig verteilte axiale Langlöcher (85), die radial außerhalb des ringförmigen zentralen Teils (78) angeordnet und dazu bestimmt sind, den Durchgang von Haltearmen (86) einer Auflageschale (88) der Rückstellfeder (32) des ersten Pneumatikkolbens (30) zu erlauben, die im Inneren der rohrförmigen Bohrung (90) des zweiten Pneumatikkolbens (52) aufgenommen wird.

7. Anordnung (10) nach einem der vorhergehenden Ansprüche, **dadurch gekennzeichnet, dass** die zweite Hydraulikkammer (56) des zweiten Hauptzylinders mit mindestens einem zweiten Bremsorgan (60) des Fahrzeugs mittels eines Hydraulikkreises (59) verbunden ist, der Einspritzeinrichtungen durch Pumpen des Hydraulikfluids in die zweite Kammer (56) aufweist, wobei diese Einspritzeinrichtungen einer regenerativen elektrischen Bremsanordnung eines Hybridfahrzeugs zugeordnet sind.

## Claims

1. Braking control arrangement (10) for a motor vehicle, comprising a brake pedal (12) capable of actuating a pneumatic brake booster (14) of at least a first master cylinder (16) connected hydraulically to at least a first braking member (18) of the vehicle,
the said booster (14) comprising a rigid envelope (20) inside which there can move at least a first transverse partition (22) delimiting in a sealed manner a first front chamber (24), subjected to a first pressure (P₁), and a first rear chamber (26), subjected to a second pressure (P₂) varying between the first pressure (P₁) and a pressure (Pₐ) greater than the first pressure (P₁),
the said booster (14) comprising a first tubular movable pneumatic piston (30) which is mounted slideably and returned elastically towards the rear inside the envelope (20) via a return spring (32), of which a front portion is secured to the first movable partition (22), and which is capable of acting on a rod (34) for actuating a first hydraulic piston (36) sliding in a first hydraulic chamber (38) of the first master cylinder (16) via a reaction disc (40),
the said booster (14) comprising a control rod (42) coupled to the brake pedal (12) and moving in the first pneumatic piston (30) selectively as a function of an axial input force exerted towards the front against a return force,
the movements of the said control rod (42) being capable of determining the openings and closings of at least one axial valve, termed "intake" valve, which is interposed between a pressure source subjected to the pressure (Pₐ) greater than the first pressure (P₁) and the first rear chamber (26), and of at least one axial valve, termed "equalizing" valve, which is interposed between the first front chamber (24) and the first rear chamber (26), in order to actuate the first movable partition (22),
the said booster comprising a plunger (44), which is received in the first tubular pneumatic piston (30), which traverses the first movable partition (22), which is secured to the end of the control rod (42), and which is capable of acting directly on the actuating rod (34) of the first master cylinder (16) via the reaction disc (40) in order to transmit to the control rod (42) the reaction force of the hydraulic fluid contained in the first braking member (18) and the first hydraulic chamber (38) of the master cylinder (16), **characterized in that** the booster (14) comprises, in front of the first partition (22):
- a second partition (46), movable inside the rigid envelope (20), delimiting in a sealed manner a second front chamber (48), communicating with the first front chamber (24), and a second rear chamber (50), communicating with the first rear chamber (26), the second rear chamber (50) being separated from the first front chamber (24) by a rigid partition (25),
- a second tubular movable pneumatic piston (52) which is mounted slideably in the envelope (20), which is traversed coaxially by the return spring (32) of the first pneumatic piston (30) and by the rod (34) for actuating the first hydraulic piston (36), and of which a front portion (51) is secured to the second movable partition (46),
the said second pneumatic piston (52) being coupled to a second hydraulic piston (54) sliding in a second hydraulic chamber (56) of a second master cylinder connected to at least a second braking member (60) of the vehicle, in order to make it possible to actuate the said second hydraulic piston (54) without the reaction force of the hydraulic fluid contained in the second braking member (60) and the second hydraulic chamber (56) of the second master cylinder being transmitted to the control rod (42).

2. Arrangement (10) according to the preceding claim, **characterized in that** the first (16) and second master cylinders constitute one and the same master cylinder (16) with coaxial chambers (38, 56).

3. Arrangement (10) according to the preceding claim, **characterized in that** the master cylinder (16) comprises a first tubular body (62) comprising the first cylindrical hydraulic chamber (38) in which the first hydraulic piston (36) is slideably mounted, and **in that** the said first body (62) comprises at least one shoulder face (64), which is fixed to a front face (66) of a second coaxial body (68) of the master cylinder (16), and from which there extends at least one cylindrical rear portion (70) which is received coaxially with play in a bore (72) of the second body (68) in order to delimit the second coaxial hydraulic chamber (56) in which the second tubular hydraulic piston (54) is slideably mounted.

4. Arrangement (10) according to one of the preceding claims, **characterized in that** it comprises means for coupling the rod (34) for actuating the first hydraulic piston (36) with the second hydraulic piston (54), which are intended to allow the second hydraulic piston (54) to be acted on by the actuating rod (34) in the event of assistance failure of the second pneumatic piston (52).

5. Arrangement (10) according to the preceding claim, **characterized in that** the actuating rod (34) comprises:
- a front portion (80) with a diameter corresponding to that of an internal bore (82) of the first hydraulic piston (36), which traverses a perforation (84) in a front end wall (76) of the second tubular pneumatic piston (52),
- a rear portion (91) with a diameter greater than that of the said perforation (84), of which a front face (92) is arranged with an axial play (J), termed "decoupling play", from the said front end wall (76) of the second tubular pneumatic piston (52) when the pneumatic pistons (30, 52) occupy their rest position, in order to allow the actuating rod (34) to act on the second hydraulic piston (54) via the front end wall (76) of the second pneumatic piston (52) in the event of assistance failure of the said second pneumatic piston (52).

6. Arrangement (10) according to the preceding claim, **characterized in that** the front end wall (76) of the second tubular pneumatic piston (52) comprises:
- at least one annular central part (78) with a diameter corresponding substantially to that of the second hydraulic piston (54) in order to allow the said second hydraulic piston (54) to be acted on, the said central part (78) being traversed by the perforation (84) for the passage of the actuating rod (34),
- at least two axial slots (85) distributed angularly in a regular manner, which are arranged radially outside the said annular central part (78) and which are intended to allow the passage of arms (86) for retaining a bearing cup (88) for the return spring (32) of the first pneumatic piston (30), which cup is received inside the tubular bore (90) of the second pneumatic piston (52).

7. Arrangement (10) according to any one of the preceding claims, **characterized in that** the second hydraulic chamber (56) of the second master cylinder is connected to at least a second braking member (60) of the vehicle via a hydraulic circuit (59) comprising means for injecting the hydraulic fluid into the said second chamber (56) by pumping, these injection means being associated with a regenerative electric braking arrangement of a hybrid vehicle.
